# EUROPEAN PATENT APPLICATION

(11) **EP 0 747 981 A2**
(43) Date of publication of application: **11.12.1996**
(21) Application number: 96304262.7
(22) Date of filing: 07.06.1996
(51) Int. Cl.: H01M 4/50, H01M 4/06, H01M 10/34, H01M 6/08

(54) **Manganese dioxide alkaline cell**

(30) Priority: 07.06.1995 US 473814
(71) Applicant: EVEREADY BATTERY COMPANY, St. Louis Missouri 63164 (US)
(72) Inventor: Urry, Lewis Frederick, Elyria, Ohio 44039 (US)
(74) Representative: Lord, Hilton David

(57) **Abstract**

A hermetically sealed alkaline cell (2) has a manganese dioxide cathode (6) in which the cathode is composed of a mixture of a minor amount of highly porous manganese dioxide and a majority of low porosity manganese dioxide, allowing enhanced performance in the load discharge test.

## Description

The present invention relates to an hermetically sealed alkaline cell having an anode, an aqueous alkaline electrolyte solution and a cathode comprised of manganese dioxide.

Alkaline cells are well known in the art, and generally employ a zinc anode, a manganese dioxide cathode and an aqueous solution of potassium hydroxide as the electrolyte. Such cells are readily commercially available for both industrial and home applications. In recent years, air assisted cells have been developed. Air assisted cells employ a zinc anode, a manganese dioxide cathode, and an aqueous solution of potassium hydroxide as the electrolyte, and the cell is so designed that the positive electrode containing the manganese dioxide is exposed to air *via* air distribution passages which allow ambient air to enter the cell and contact the manganese dioxide. In conventional alkaline cells, the manganese dioxide is shielded from the air by an hermetic seal. In a fixed volume cell (such as AA size), the components of the air assisted cell that need to be added or modified to permit air to contact the manganese dioxide occupy additional space in the cell that could otherwise be used for additional active components.

Maximum power output of a cell requires maximal amounts of the active components to be assembled into the cells. In conventional alkaline cells, the manganese dioxide is generally made with a low porosity manganese dioxide material so that the maximum amount of manganese dioxide can be assembled into the cell. In US-A-5,079,106, an improved air assisted alkaline cell is disclosed in which the cathode for the cell is a mixture of a porous manganese dioxide material and a substantially less porous manganese dioxide material. In this Patent, an experimental alkaline cell was compared with the improved air assisted alkaline cell, and it was noted that the experimental alkaline cell had better discharge capability on high rate drains, since the cathode material present in the assisted alkaline cell had less manganese dioxide than that of the experimental alkaline cell.

US-A-5,277,890 relates to the manufacture of manganese dioxide by a chemical process. The resulting manganese dioxide product takes the form of particles characterised by filament-like protrusions jutting out from its surface. This type of manganese dioxide can be manufactured by reacting manganese sulphate with sodium peroxodisulphate in aqueous solution, and the process can be controlled to yield high density manganese dioxide. The manganese dioxide formed can be deposited directly onto the surface of electrolytic manganese dioxide (EMD). The manganese dioxide product is particularly suitable for use as a cathode active material in electrochemical cells.

We have now surprisingly found that sealed alkaline cells outperform other alkaline cells of the art when they are constructed with a manganese dioxide cathode containing small amounts of highly porous manganese dioxide.

Thus, in a first aspect, the present invention provides an hermetically sealed alkaline electrochemical cell, wherein the cathode comprises a mixture of highly porous manganese dioxide having a porosity of between at least 22% and 70% with low porosity manganese dioxide having a porosity of less than 22% and, wherein the weight percent of the highly porous manganese dioxide is between 1 weight percent to 35 weight percent of the weight of the low porosity manganese dioxide.

In an alternative aspect, the present invention provides an hermetically sealed alkaline electrochemical cell comprising an anode active material, an aqueous alkaline electrolyte solution, a manganese dioxide cathode and a separator disposed between the anode and cathode and whereby the cathode comprises a mixture of highly porous manganese dioxide having a porosity of between at least 22% and 70% with low porosity manganese dioxide having a porosity of less than 22% and, wherein the weight percent of the highly porous manganese dioxide is preferably between 5 weight percent to 35 weight percent of the weight of the low porosity manganese dioxide.

Advantageously, the present invention is able to provide a sealed alkaline cell that employs a manganese dioxide cathode that is composed of a minor mount of a highly porous manganese dioxide material mixed with a low porosity manganese dioxide material and the cell is provided with seal means to effectively prevent atmospheric oxygen entering the cell.

The present invention also advantageously provides a sealed alkaline cell that employs a manganese dioxide cathode, wherein the manganese dioxide component is composed of a minor amount of chemically synthesised manganese dioxide (CMD) and a major amount of electrolytically deposited manganese dioxide (EMD). The weight percent of the highly porous manganese dioxide material is preferably between 1 wt.% to 35 wt.% of the low porosity manganese dioxide material.

As used herein, porosity, in relation to manganese dioxide is determined by:
first, measuring the manganese dioxide's real density;
second, measuring the manganese dioxide's apparent density;
third, subtracting the apparent density from the real density, thereby obtaining the difference between the two densities; and
fourth, dividing this difference by the real density.

As used herein the term "low porosity manganese dioxide" is used to indicate that the relevant manganese dioxide has a porosity of less than 22%, while the terms "highly porous manganese dioxide" or "high porosity manganese dioxide" are indicative of manganese dioxide material having a porosity of 22% or higher.

In accordance with the present invention, a minor amount of highly porous manganese dioxide material is mixed with a majority of low porosity manganese dioxide material. The effect of this is to provide a cathode that has ion diffusion paths dispersed throughout. This improves and helps to guarantee diffusion paths through the solid manganese dioxide cathode.

In tests performed on AA size alkaline manganese dioxide cells whose cathodes contain a minor amount of highly porous manganese dioxide (hereinafter known as the experimental cells), the percent solid packing of the cathodes was reduced by about 2% relative to otherwise identical AA size cells having cathodes containing only low porosity manganese dioxide (the control cells). Specifically, the control cells had a 73.2 volume percent solid packing in the cathode while the experimental cells had a 71.8 volume percent solid packing in the cathode. In addition, the total manganese dioxide input was reduced by 2% for the experimental cells (2.35 ampere hours for the experimental cells *versus* 2.4 ampere hours for the control cells).

We found that the experimental cells outperformed the control cells by 12% (610 minutes *versus* 540 minutes) on a 1.8 ohm load discharge test in which the cell was discharged for 15 seconds per minute down to a 0.9 volt cut-off. Without being restricted by theory, we believe that this 12% increase demonstrated that better ion diffusion through the cathode can be obtained through the use of a minor amount of highly porous manganese dioxide in the cathode. Better ion diffusion through the cathode also seems to be demonstrated in the short circuit amperage (16.6 amps for the control cells *versus* 19.1 amps for the experimental cells) and a greater pickup of electrolyte during the electrolyte soak-up stage of the cell assemblies (1.2 grams for the experimental cells versus 0.99 grams for the control cells).

Further, although the cathode capacity was reduced by using a small percent of the highly porous manganese dioxide material in place of the low porosity manganese dioxide material, the experimental cell showed no signs of running out of water when discharged to a 1.0 volt cut-off.

In accordance with the present invention, a minor amount of highly porous manganese dioxide material (about 35% or less of the weight of the low porosity manganese dioxide material) is used in the manufacture of the cathode. Preferably, the amount used is between 1% and 20% of the weight of the low porosity manganese dioxide material and, more preferably, between 5% and 15% of the weight of the low porosity manganese dioxide material.

A good source of highly porous manganese dioxide is so-called chemically synthesised manganese dioxide (CMD). CMD is usually marketed with a porosity of 25% to 35%. However, CMD can be prepared in the form of very porous spheres having a porosity of up to about 60%. The porosity of the highly porous manganese dioxide material is preferably at least 22%, preferably more, more preferably between 25% and 65%, and most preferably between 50% and 60%.

If the CMD spheres are packed close together, especially with larger amounts of the material, then they may be packed so that spaces are provided between the porous spheres, thereby providing paths to assist ion diffusion through the positive electrode. The reason for not wanting to manufacture a cell using only CMD as the active cathode material is that the total energy capacity of the cell would be then be lowered due to the decrease in the amount of MnO₂ available per unit volume of cathode.

High porosity manganese dioxide can also be prepared by starting with manganese ore. The ore is first converted to a nitrate which is then treated with ammonium carbonate and chemical oxidants to form manganese carbonate. The manganese carbonate, after washing, is roasted in the presence of oxygen and chemical oxidants to form manganese dioxide which is then purified by washing to obtain the battery grade manganese dioxide material. The preferred high porosity manganese dioxide used in the preparation of the cathode of the hermetically sealed alkaline cells of the present invention is a material obtained from Sedema which is a division of Sadacam S.A. of Brussels, Belgium. The material is identified by Sedema as Sedema TR manganese dioxide. The material has a porosity of approximately 60%.

Conventional low porosity manganese dioxide is obtained from the electrolytic deposition of manganese dioxide and can be purchased from commercial suppliers. Electrolytically deposited MnO₂ (EMD) is a good source of low porosity solid MnO₂, and can be obtained in the form of dense particles after the electrolytically deposited material has been stripped from the electrodes, crushed and screened. EMD typically has a porosity of less than 22%, preferably between 10% and 16%, and is, therefore, referred to as low porosity manganese dioxide material.

While CMD is a good source of highly porous manganese dioxide, other sources are now bot available becoming available. Likewise, EMD is a readily available source of bulk, low porosity manganese dioxide, but other sources are available, including naturally occurring manganese dioxide and conventionally available low porosity CMD. Accordingly, it will be understood that the present invention is limited to neither CMD nor EMD as such, and that it is only necessary to use high porosity and low porosity manganese dioxide in the manufacture of the cathode.

In the manufacture of the cathode, the highly porous manganese dioxide and low porosity manganese dioxide are suitably added to a mixer along with a small amount of Teflon (registered trade mark) in an approximately 0.6% w/w aqueous solution, which helps to wetproof the cathode and to improve the stability of the formed electrode structure. It will be appreciated that Teflon is a trademark of Dupont and is used to identify polytetrafluoro-ethylene polymeric materials.

.After thoroughly mixing the components, the cathode composition can be poured into a steel container for the cell. In another embodiment, the cathode composition can be preformed into rings which are then assembled into the cell container, or can. Other means for loading the can with the cathode material are also envisaged and will be apparent to those skilled in the art. For example, an impact extruder could be used to load the cell container with the cathode material and, indeed, this is a preferred method. Under the pressure of the impact extruder, the cathode material becomes tightly packed about the walls of the container, with the Teflon serving to bind the mixture into a compact mass in which the highly porous manganese dioxide material is able to provide ion diffusion paths through the cathode. It will be appreciated that it is preferable to have the mixture of highly porous and low porosity manganese dioxide materials form a homogeneous mixture so that the ion paths created by the porous material will be substantially dispersed.

When the materials are combined in a homogeneous mixture, and then added to the container to form the cathode, the preferred average porosity for the resulting cathode is 15% to 35% and more preferably 20% to 25%. It will be readily apparent to the person skilled in the art what sort of amounts of highly porous manganese dioxide material need to be used, and that porosities and amounts of the high and low porosity materials need be selected according to the final cathode porosity desired. Thus, the paths formed through the cathode can be adjusted to accommodate for even special-sized cells to provide optimum performance.

A typical cell of the present invention comprises an alkaline electrolyte, a cathode and an anode arranged in an hermetically sealed container in a manner effective to provide electrochemical energy, i.e. when the cell is placed in a circuit, electrochemical energy is provided to the circuit. The cells have terminals of opposite polarity, one terminal being in contact with the cathode and the other in contact with the anode. The cell is sealed in a manner effective to contain the cell components in the container under conditions of transport and use and prevent the air from entering the cell. The cell construction can include a cupped metallic can, suitably constructed of steel or other metal and can be nickel plated in whole or in part. A tubular cathode containing the active cathode material and conductor and, in some cases, a binder can be lined on the inner surface of the can, and a separator suitably made of a non-woven cellulose or polymer fibre or microporous plastic, or cellophane film, can be lined on the inner surface of the tubular cathode. In this construction, the can is in contact with the cathode and thus forms the cathodic terminal.

An anode made of a mixture of active anode material, electrolyte, optionally an electrolyte swellable binder, such as a polyacrylic acid, can be enclosed within the separator. An anode current collector member is inserted into the anode. The cell is closed with a cover and sealed. The cover is in contact with the anode current collector member and is the anodic terminal of the cell. Any conventional seal can be employed. It is desired that the cell construction not have a venting means which would freely vent under normal pressures generated in the cell during a normal discharge.

The electrolyte used in the present invention is an aqueous alkaline solution, such as potassium hydroxide or sodium hydroxide. The concentration of the solution can be any concentration that provides for ionic conductivity. Typically, in the assembled cell the concentration preferably ranges from about 30% to about 42% w/v. Other cell constructions are useable with the cathodes of the invention, and it will be appreciated that the above serves merely as a general guide to typical alkaline cells in which the cathodes of the invention can be used.

In addition to manganese dioxide, the cathode necessarily further comprises a compound that is electrically conductive. This compound is called a conductor and, of the many types of known conductors, synthetic or natural graphite is preferably used in the cells of the present invention. Synthetic and natural graphite are readily commercially available, and one source is Lonza Std., a Swiss company. The cathode can further comprise a binder, suitable examples of which include polytetrafluoroethylene and polyethylene.

Thus, the cathode comprises a major amount of manganese dioxide, a conductive amount of conductor, such as graphite, and often an effective amount of binder. Typically, the manganese dioxide makes up between about 80 to 85 weight percent of the total cathode weight. When a binder is employed, the binder will generally comprise less than about 4% by weight. The remainder of the cathode will be made up of graphite and electrolyte solution. The amount of the electrolyte solution should be sufficient to wet the dry components, and to provide a mixture that can be moulded. The cathodes are then typically prepared by mixing the components together and dispensing the mix into the container where the mix is then moulded or compressed against the inside of the container, or premoulded as rings and the rings pressed into the container, as described above.

Zinc is the preferred active anode material in the cells of the invention. Preferably, the zinc is low gassing zinc, and is in powder form. In a preferred embodiment, the powdered zinc is combined with a binder, optional components, and an amount of the electrolyte solution to form a gel. The anode gel generally expands when it is discharged. A suitable zinc alloy contains zinc and a minimum amount of lead.

The cells of the present invention preferably employ additives that inhibit the corrosion of zinc. Beneficial components that can be added to the cell to inhibit the corrosion of zinc include ethylene oxide polymers and derivatives thereof. Some examples of materials that can be added to the anode include lead, indium, cadmium, bismuth, thallium, tin, aluminium, and compounds thereof. An indium-containing compound can be added to the anode mix as a zinc corrosion inhibitor. Suitable indium compounds include indium hydroxide, indium oxide as well as indium metal.

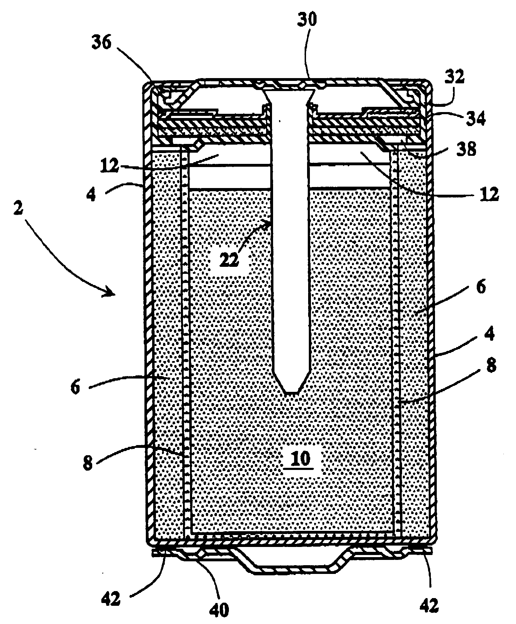

The accompanying drawing is a cross-sectional view of an inverted alkaline cell of the present invention.

Referring to the drawing, the alkaline cell 2 is assembled in a conventional conductive steel container 4 which also forms an external terminal for the cell. The cathode 6 for cell 2 is a mixture of highly porous manganese dioxide, low porosity manganese dioxide, graphite, electrolyte and optionally a binder.

After the cathode 6 is formed in the container 4, a separator 8 is added to physically isolate the anode material 10 from the cathode 6 and the container 4, while still permitting ion transport between the electrodes. The use of highly porous manganese dioxide mixed with low porosity manganese dioxide in accordance with the invention enables paths to be formed in the cathode to provide an improvement for ion diffusion through the cathode. The separator 8 could be made of two strips of separator material arranged perpendicular to one another and inserted into the cathode's tubular shaped opening, thereby forming a separator basket with a central opening. The anode mix 10 is then added to the separator lined cavity of the cell. An open area 12 is left in the cell to provide room for any expansion of the anode mix 10. An anode current collector 22 is shown as a rectangular slat.

To complete assembly of the cell, an external bottom cover 30 is placed into the steel container 4 and is also insulated from contact with the container 4 by the peripheral wall 32 of seal member 34. The bottom cover 30 makes electrical contacts with current collector 22, enabling the bottom cover 30 to become the external terminal for cell 2. The edge of the steel container 4 is rolled to hold the upturned portion 36 of the bottom cover 30 locked in position in the bottom of the cell 2. Top cover 40 can be fastened to the container by welds 42 after the cathode is rammed into place.

## Claims

1. A hermetically sealed alkaline electrochemical cell comprising a manganese dioxide cathode, characterised in that the cathode comprises a mixture of highly porous manganese dioxide having a porosity of between 22% and 70%, and low porosity manganese dioxide, having a porosity of less than 22%, wherein the weight percent of the highly porous manganese dioxide is between 1 and 35 % of the low porosity manganese dioxide.

2. A cell according to claim 1, wherein the highly porous manganese dioxide has a porosity of between 25% and 65%.

3. A cell according to claim 1, wherein the highly porous manganese dioxide has a porosity of between 50% and 60%.

4. A cell according to claim 1, wherein the low porosity manganese dioxide has a porosity of 10% up to 22%.

5. A cell according to claim 4, wherein the low porosity manganese dioxide has a porosity of between 10% and 16%.

6. A cell according to any preceding claim, wherein the weight percent of the highly porous manganese dioxide is between 5 and 35 % of the low porosity manganese dioxide.

7. A cell according to claim 6, wherein the weight percent of the highly porous manganese dioxide is between 5 and 20 % of the low porosity manganese dioxide.

8. A cell according to claim 1, wherein the porosity of the cathode is between 15% and 35%.

9. A cell according to any preceding claim, wherein the highly porous manganese dioxide is chemically synthesised manganese dioxide.

10. A cell according to any preceding claim, wherein the low porosity manganese dioxide is electrolytically deposited manganese dioxide.

11. A cell according to any preceding claim, wherein the alkaline electrolyte is potassium hydroxide.

12. A cell according to any preceding claim, wherein the anode is a zinc anode.

13. A cathode for a sealed alkaline cell, as defined in any of claims 1 to 10, further comprising a conductor and, optionally, a binder.
